# EUROPEAN PATENT SPECIFICATION

(11) **EP 0 687 279 B1**
(45) Date of publication and mention of the grant of the patent: **01.07.1998**
(21) Application number: 94909923.8
(22) Date of filing: 03.03.1994
(51) Int. Cl.: C08G 18/08, C08G 18/24, C08G 18/32, C08L 75/04

(54) **POLYMER POLYOLS**
POLYMERPOLYOLE
POLYOLS POLYMERES

(30) Priority: 05.03.1993 EP 93301698
(43) Date of publication of application: 20.12.1995
(73) Proprietor: SHELL INTERNATIONALE RESEARCH MAATSCHAPPIJ B.V., 2596 HR Den Haag (NL)
(72) Inventor: VANDICHEL, Jean-Claude, Noel, Eliane, B-1348 Ottignies (BE); AERTS, Rene, B-1348 Ottignies (BE)
(86) International application number: EP9400636
(87) International publication number: WO9420558

(56) References cited:
- EP-A- 0 079 115
- EP-A- 0 129 977
- EP-A- 0 318 242

## Description

The present invention concerns the preparation of high solids content polymer polyols which are especially suited for the production of high resilience or combustion modified high resilience polyurethane foams and their use in polyurethane foam preparation.

Polymer polyols are well known in the art as dispersions of solid polymer in a carrier polyol, see, for example, J. of Cellular Plastics, March 1966, pages 84 to 96. They are of high interest in view of their suitability, inter alia, for the preparation of special grades of polymer foams such as the high resilience polyurethane foams used in quality products such as car interiors and domestic furnishings.

A useful polymer polyol has to be a dispersion of discrete polymer particles in a carrier polyol which is stable over time (desirably for a minimum of 6 months).

The useful polymer polyol has also to have good processing characteristics and ideally leads to foam having a good cell opening, i.e. not excessive cell opening which could cause the foam to collapse nor too little cell opening which could lead to shrinkage and an undesirable quality for the resulting foams. The useful polymer polyol also has to be pumpable in conventional foam-making equipment. Although the sophistication of pump technology means that potentially all polymer polyols of measurable viscosity are usable, desirably certain viscosity ranges are especially suitable for specific solids content polymer polyols to keep pump running costs in an economical range. Thus for the conventional solids content 10 wt% polymer polyol, an ideal viscosity range would be from 600 to 2000 mPas (equating to roughly 700 to 2100 cPs) at 25 °C. It has been found that direct preparation of a 10 wt% polymer polyol does not always give a viscosity in the desired range, and preparation routes have been sought to provide higher solids content polymer polyols which can be diluted with a compatible carrier polyol to a 10wt% solids content polymer polyol having a viscosity in the ideal viscosity range.

British Patent Specification No. 2 072 204 A proposes a polymer-modified polyol formed by polymerising an olamine, especially an alkanolamine, with an organic polyisocyanate in the presence of a polyol. The solids content of dispersions preparable by this route is envisaged in the document to be in the range of roughly 1 to 35% by weight. These dispersions have become commercialised as the so-called "PIPA polyol" dispersion polymer polyols and it is usual to prepare the polymer polyol, using as catalyst dibutyltin dilaurate, at a concentration at around 10wt%, or at a slightly higher solids content with subsequent dilution with polyol to give the lower desired solids content.

We have found that whereas direct preparation by the route of GB-A-2,072,204, of a 20wt% polymer polyol was possible using the preferred catalyst, dibutyltin dilaurate, it was not possible to prepare a 30wt% polymer polyol. Furthermore, using stannous octoate as catalyst, an alternative tin catalyst noted in GB-A-2072 204, it was not even possible to prepare a 20wt% polymer polyol.

European Patent Specification No. 79,115B proposes forming a high strength polymer-modified polyol by reacting a polyisocyanate with a tertiary-N-polyolamine in the presence of a polyol and then adding more polyisocyanate to provide a specific ratio of isocyanate groups to hydroxyl groups and to obtain a specified high solids content in the polymer polyol dispersion. The solids content of such polymer polyols is in the range of from 40 to 80wt%; 50wt% solids content polymer polyols are the especially preferred form. If desired, lower solids content polymer polyols, such as the conventional 10wt% dispersions, are then prepared by dilution with carrier polyol. High amounts of isocyanate in such processes, however, can lead to excessive crosslinking and great care has to be taken to avoid too-high a viscosity, or gelling of the product. EP-B-79,115 indicates various precautions that are necessary to avoid gellation, and indeed the separate controlled addition of a portion of the isocyanate is noted to avoid gellation on a large scale.

Another form of polymer modified polyol is proposed in International Patent Specification No. WO 92/02567 whereby instead of an olamine, an olphosphine is utilised in the solid phase to enhance flame retardancy properties of polyurethane foams prepared therefrom. The preparation process of the polymer polyol is by direct reaction of olphosphine and isocyanate in the presence of a polyol, and the dispersions achieved in the examples range from 7 to 16wt% solids content, with varying viscosities which are generally of a high level. The base polyol may itself be a polymer-modified polyol; use of a styrene-acrylonitrile polymer polyol is exemplified and yields an olphosphine polymer-modified polyol of 16wt% solids content and a viscosity of 4300cPs.

It has now been found possible to prepare a stable dispersion of an olamine polymer-modified polyol having roughly a 30wt% solids content by a simple process which utilises a prepolymer stabiliser.

By 'prepolymer' is meant a molecule which can be combined with another by conventional polymer linking processes.

In accordance with the present invention, there is provided a process for preparing a polymer-modified polyol, which process comprises polymerising an olamine with a polyisocyanate in the presence of a polyol and of an added stabiliser which is itself an olamine polymer-modified polyol.

The addition of the stabiliser ensures a level of base polyol incorporation that is sufficient to obtain a stable dispersion. The stabiliser is thought to contain reaction products that participate in the reactions during the process of the invention.

The stabiliser thus participates chemically in the preparation process and does not remain inert as do stabilisers proposed for other polymer-modified polyol systems, such as are used in the styrene/acrylonitrile copolymer polyol systems.

In this text, the term 'polymer-modified polyol' is used interchangeably with the alternative name of 'polymer polyol'.

It is possible to use any polyol, polyisocyanate or olamine suited for use in the manufacture of polyurethanes. Such polyols and polyisocyanates are well known to people skilled in the art of polyurethane technology, and are well documented in the relevant literature.

Thus the polyol used in the process of the invention or to prepare the stabiliser may be a polymeric polyol such as a polyether, polythioether, polyester, polyesteramide, polyacetal or polycarbonate or a mixture thereof, having a molecular weight in the range of from 200 to 16,000. Of particular interest, however, are polyether polyols having a molecular weight of from 200 to 10,000, especially from 1000 to 10,000, such as are described in British Patent Specification No. 1,482,213. Suitably they are polyoxyalkylene polyols obtained by reacting an alkylene oxide or mixture of alkylene oxides with an active hydrogen-containing initiator. Ethylene oxide-tipped polyoxypropylene polyols are especially useful for the manufacture of high resilience flexible polyurethane foams. Other poly(oxypropylene-oxyethylene)polyols in the form of random or block copolymers are also useful.

Organic polyisocyanates, i.e. an organic isocyanate having two or more isocyanate groups, that may be used in the invention include aliphatic, cycloaliphatic, araliphatic, aromatic and heterocyclic polyisocyanates. Of particular interest are the aromatic polyisocyanates, for example toluene diisocyanate (TDI) and diphenylmethane diisocyanate (MDI) which are commercially available in substantially pure and crude forms. More particularly these include 2,4 and 2,6-toluene diisocyanates and mixtures thereof; diphenylmethane-2,4'-diisocyanates and mixtures thereof (generally referred to as pure MDI), for example, a mixture containing from 70 to 100%, especially 80%, by weight of the 4,4'-isomer and from 0 to 30%, especially 20%, by weight of the 2,4'-isomer; mixtures of MDI with polyphenyl polymethane polyisocyanates made by phosgenating a mixture of polyamines which is obtained by condensing aniline with formaldehyde (generally referred to as crude or polymeric MDI); and mixtures of TDI and MDI, pure or crude, for example, a mixture containing 60% by weight of TDI and 40% by weight of MDI. There may also be used diisocyanates which have been modified in known manner to introduce a significant isocyanurate, carbodiimide, uretonimine, buiret or allophanate content. Other polyisocyanates which may be used include isocyanate-ended prepolymers, for example, reaction products of a diisocyanate with a deficiency of one or more low molecular weight polyols such as trimethylolpropane, dipropylene glycol or tripropylene glycol; and polyisothiocyanates, polyisoselenocyantes and mixtures thereof.

To ensure that excessive crosslinking is avoided it is preferred that a polyisocyanate with an isocyanate index in the range of from 55 to 90, preferably 67 to 80, is utilised in the process of the invention or in the preparation of the stabiliser.

Olamines are defined as organic compounds having one or more hydroxyl groups and one or more amine groups, and may be any of those specified or described in GB-A-2,072,204.

Suitable examples of olamines are: monoethanolamine, diethanolamine, triethanolamine, N-methylethanolamine, N-ethylethanolamine, N-butylethanolamine, N-methyldiethanolamine, N-ethyldiethanolamine, N-butyldiethanolamine, monoisopropanolamine, diisopropanolamine, triisopropanolamine, N-methylisopropanolamine, N-ethylisopropanolamine, N-propylisopropanolamine. Substituted alkanolamines may also be used. A preferred alkanolamine is triethanolamine.

The preparation of the stabiliser or of the polymer-modified polyol of the invention may be catalysed using any of the conventional catalysts for polyurethane chemistry, such catalysts include tertiary amines such as, for example, triethylenediamine, N-methylmorpholine, diethylethanolamine, and dimethylbenzylamine; tertiary phosphines such as trialkylphosphines, and dialkylbenzylphosphines; strong bases such as alkali and alkaline earth metal hydroxides, alkoxides and phenoxides; salts or organic acids such as sodium acetate, stannous octoate, stannous oleate, and lead octoate; and organometallic derivatives such as disclosed in U.S. Patent Specification No. 2 846 408.

Other conventional ingredients used for making polyurethane foams may be incorporated into the polymer-modified polyol prepared in accordance with the invention, such as surfactants, crosslinking or chain lengthening agents, additives to regulate cell size and structure, e.g. silicone oil or polysiloxane-polyalkylene oxide block copolymers, blowing agents, fillers, pigments, plasticisers and flame retardants, e.g. halogenated alkylphosphates and melamine. In relation to flame retardants it is possible that an olphosphine may be used in conjunction with an olamine in the preparation of the stabiliser and/or of the polymer-modified polyol, to confer flame retardation properties. Suitable olphosphines are discussed in detail in WO 92/02567.

It will be appreciated that the polyol, polyisocyanate and olamine utilised in the preparation of the stabiliser and subsequently in the preparation of the polymer-modified polyol may be the same or different.

Preferably, both for the preparation of the stabiliser and of the polymer-modified polyol, triethanolamine is used as the olamine component. A preferred polyisocyanate for either is a TDI-based isocyanate, either in pure form or as an 80/20wt% mixture of the 2,4- and 2,6-isomers of toluene diisocyanate.

Preferred forms of polyol and of catalyst, where utilised, for the two preparations do differ.

Especially good results have been achieved by the use of a high reactivity polyol to form the stabiliser. Such high reactivity enables as much polyol as possible to be incorporated into the stabiliser polymer dispersion. Suitable examples of high reactivity polyols are ethylene oxide tipped polyoxypropylene polyols having an ethylene oxide content preferably of from 10 to 20wt%. A very useful polyol is that sold under the trade name CARADOL SA36-01 (formerly designated CARADOL MD1078) by SHELL.

Ethylene oxide tipped polyoxypropylene polyether polyols are also suited for use in the preparation of the polymer-modified polyol, preferably having from 10 to 20 wt% ethylene oxide content, especially an ethylene oxide content of less than 15wt%. One such polyol is that sold under the trade name CARADOL MC36-3 (formerly designated CARADOL 36-3) by SHELL.

Whilst any catalyst is suitable for use in the present invention, tin-based catalysts have given very useful results. As suitable examples of tin-based catalysts which may be used, stannous octoate, stannous oleate, stannous stearate, dibutyltin dilaurate and dibutyltin 2-ethylhexanoate may all be mentioned. It is preferred to use dibutyltin dilaurate in the preparation of the stabiliser. Stannous octoate is preferred as the catalyst in the preparation of the stable, high solids content polymer-modified polyol by the process of the invention, which is surprising as it has been found that with stannous octoate not even a 20wt% solids content polymer polyol can be prepared by the unstabilised direct route of GB-A-2,072,204.

The stabiliser, an olamine polymer-modified polyol, may be prepared using the process disclosed in GB-A-2,072,204 and usefully the quantities of starting materials are chosen so that the stabiliser suitably has a solids content in the range of from 1 to 15wt%. Preferably the solids content of the stabiliser is in the range of from 6 to 8wt%. The amount of stabiliser utilised in the process of the invention is preferably in the range of from 1 to 15 parts by weight, especially 4 to 10, based on the total weight of the reaction components.

The quantities and proportions of the components to form the polymer-modified polyol by the process of the invention are chosen depending on the desired final solids content and viscosity of the product (the viscosity level is dependent upon the solids content). The process of the present invention is particularly suited to the preparation of polymer polyols having up to 50wt% solids content; a 30wt% solids content is particularly useful.

A 30wt% solids content polymer polyol could be used directly with suitable processing equipment, in the preparation of polyurethane foam. However for most applications it is still preferred to dilute the polymer polyol with further base polyol, which may be the same or different to that already utilised in the polymer-modified polyol, to the more conventional solids content of 10 to 15wt%.

The PIPA polyol currently available commercially as CARADOL SP50-01 is a 10wt% solids content directly-prepared polymer polyol having a viscosity of 2300 cPs at 25°C.

When diluted to a 10wt% solids content, the polymer polyol prepared by the present invention can yield a polymer polyol having a viscosity nearer to 1000 cPs. This is advantageous and enables more economic processing for commercial polyurethane manufacture.

The reaction to form the polymer-modified polyol, and indeed the reaction to form the olamine polymer-modified polyol stabiliser, may be carried out by mixing of the reactants, with stirring, at an applied temperature in the range of from 0 to 100°C, but usually at ambient temperature. The reaction is exothermic. A simple batch process may be used or continuous in-line blending of the components may be followed.

Naturally, the stabiliser may be prepared fresh and used directly in the preparation process of the invention. This, then 2-stage process, may be effected also as a batch or continuous process operation. As the stabiliser is, however, itself a stable polymer polyol dispersion, it may be prepared at a different time, or place, and stored until needed.

The polymer-modified polyols prepared in accordance with the invention are useful in the preparation of various polyurethane articles, particularly foams and especially high resilience or combustion modified high resilience foams; casting systems; coating systems and adhesive systems.

The invention will now be illustrated by the following Examples in which Examples 1 and 2 show the preparation of the prepolymer stabiliser, Examples 3 to 5 show the preparation of the stabilised polymer polyols of the present invention, and Examples 6 and 7 are comparison examples.

In the Examples, the notation "pbw" indicates "parts by weight", and the commercially available polyols and diisocyanate used have the characterising features as follows:
- CARADOL SA36-01 -: an activated propylene oxide/ethylene oxide based polyether polyol, sold by SHELL, which is a glycerol-based triol containing 17wt% ethylene oxide; weight average molecular weight 4500 and hydroxyl value 36mg KOH/g polyol.
- CARADOL MC36-03 -: a glycerol initiated triol, sold by SHELL, containing 13wt% ethylene oxide; weight average molecular weight 4500 and hydroxyl value 36mg KOH/g polyol.
- CARADATE 80 -: an 80/20wt% mixture of 2,4 and 2,6 toluene diisocyanate.

"CARADOL" and "CARADATE" are both Trade Marks.

The isocyanate index is given in the Examples for the diisocyante used. An index of 100° means that the amount of isocyanate groups present is sufficient to react with all hydroxy groups. In relation to the stabiliser and polymer polyol of the present invention the isocyanate index expressed in the Examples is given with respect to the triethanolamine only, ie, base polyol hydroxy groups are not included.

The viscosities (cps: centipoise) quoted in the Examples were obtained by standard procedures using a Ferranti-Shirley Cone and Plate Viscometer.

### EXAMPLES

### EXAMPLE 1

The following ingredients were mixed with continuous stirring:

| | |
|---|---|
| CARADOL SA36-01 | 92.28pbw |
| Triethanolamine | 3.33pbw |
| CARADATE-80 | 4.38pbw |
| Dibutyltin dilaurate | 0.01pbw |

The triethanolamine used was 98% pure; the dibutyltin dilaurate (DABCO T-12 by Air Products) was used as 5% solution in the polyol; the isocyanate index of CARADATE-80 was 75°.

The product had a viscosity of 2940cPs at 25°C and a solids content of 7.72wt%.

### EXAMPLE 2

This Example was carried out in the same way as Example 1 but with the following proportions of reactants:

| | |
|---|---|
| CARADOL SA36-01 | 93.44pbw |
| Triethanolamine | 2.73pbw |
| CARADATE-80 | 3.82pbw |
| Dibutyltin dilaurate | 0.01pbw |

The CARADATE-80 had an isocyanate index of 80°.

The product obtained had a viscosity of 2950cPs at 25°C and a solids content of 6.56wt%.

### EXAMPLE 3

A number of tests were carried out in which differing amounts of CARADOL MC36-03, triethanolamine, CARADATE-80, stannous octoate (used as the product sold by Air Products under the trade name DABCO T-9) and stabiliser as prepared in Example 1 were mixed together with continuous stirring, to obtain a 30wt% solids content polymer polyol which was in each case stable over time with no settling out of solids.

Each polymer polyol was used to prepare flexible slabstock foams in conventional manner with diisocyanate CARADATE-80. The processing characteristics of the foams prepared were monitored and visually evaluated. Helpful in the foam processing evaluation is the degree of foam shrinkage observed.

The results of 10 tests are given in Table 1 below:

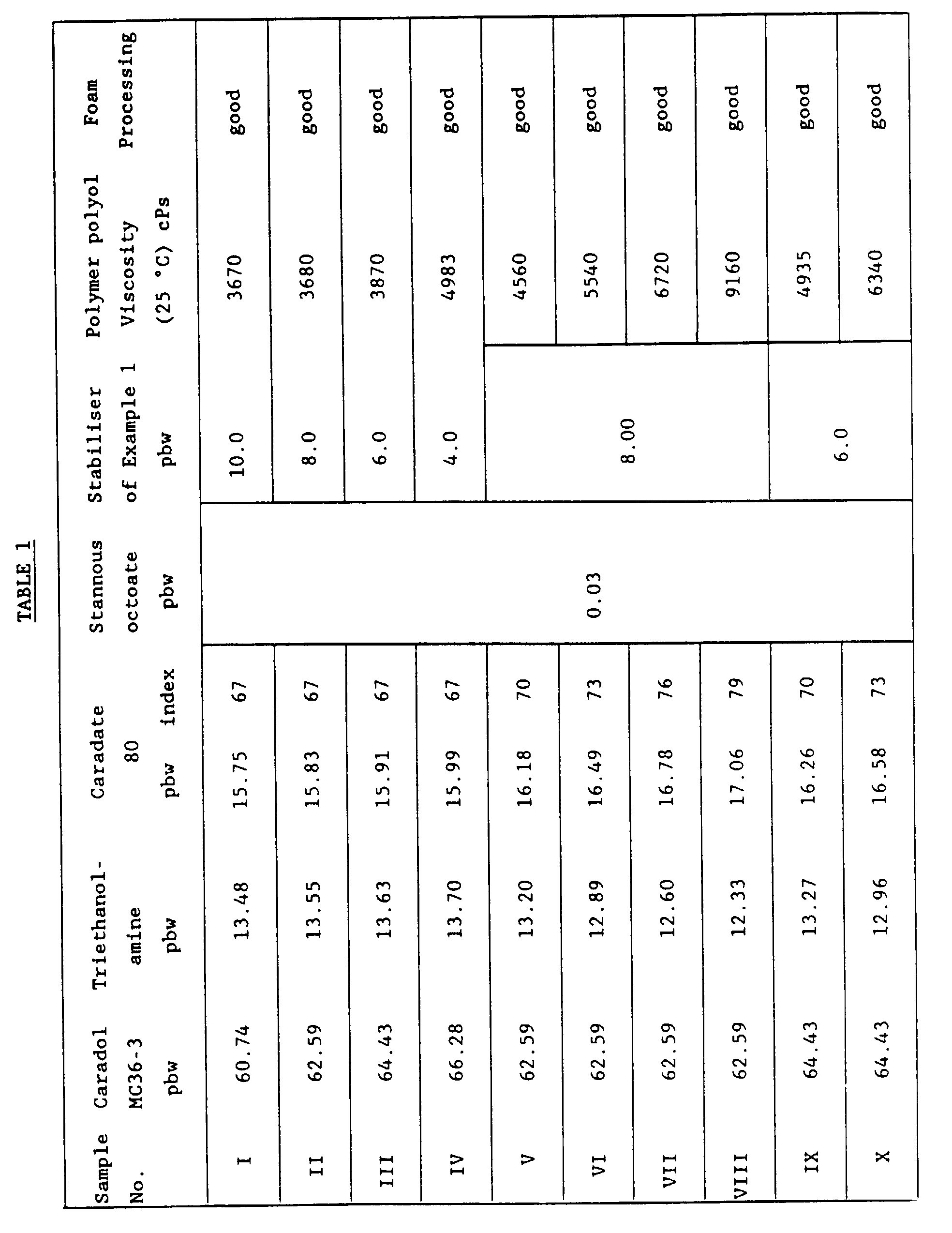

### EXAMPLE 4

Following the procedure of Example 3, a number of polymer polyols of a 30 wt% solids content were prepared using the stabiliser as prepared in Example 2 together with CARADOL MC36-03, triethanolamine, CARADATE-80 and stannous octoate (as DABCO T-9). Each polymer polyol was stable over time with no settling out of solids.

Again slabstock foam was prepared from each sample polymer polyol as for Example 3 and the foam processing was assessed. The results of 23 tests are given in Table 2.

A commercially acceptable styrene/acrylonitrile polymer polyol (sold under the trade name VORALUX HN 202 by Dow) gives a foam processing rating of "good" by the same evaluation.

The results of Examples 3 and 4 show that all of the polymer polyols of the present invention gave an acceptable foam processing; no or only small amounts of foam shrinkage were observed.

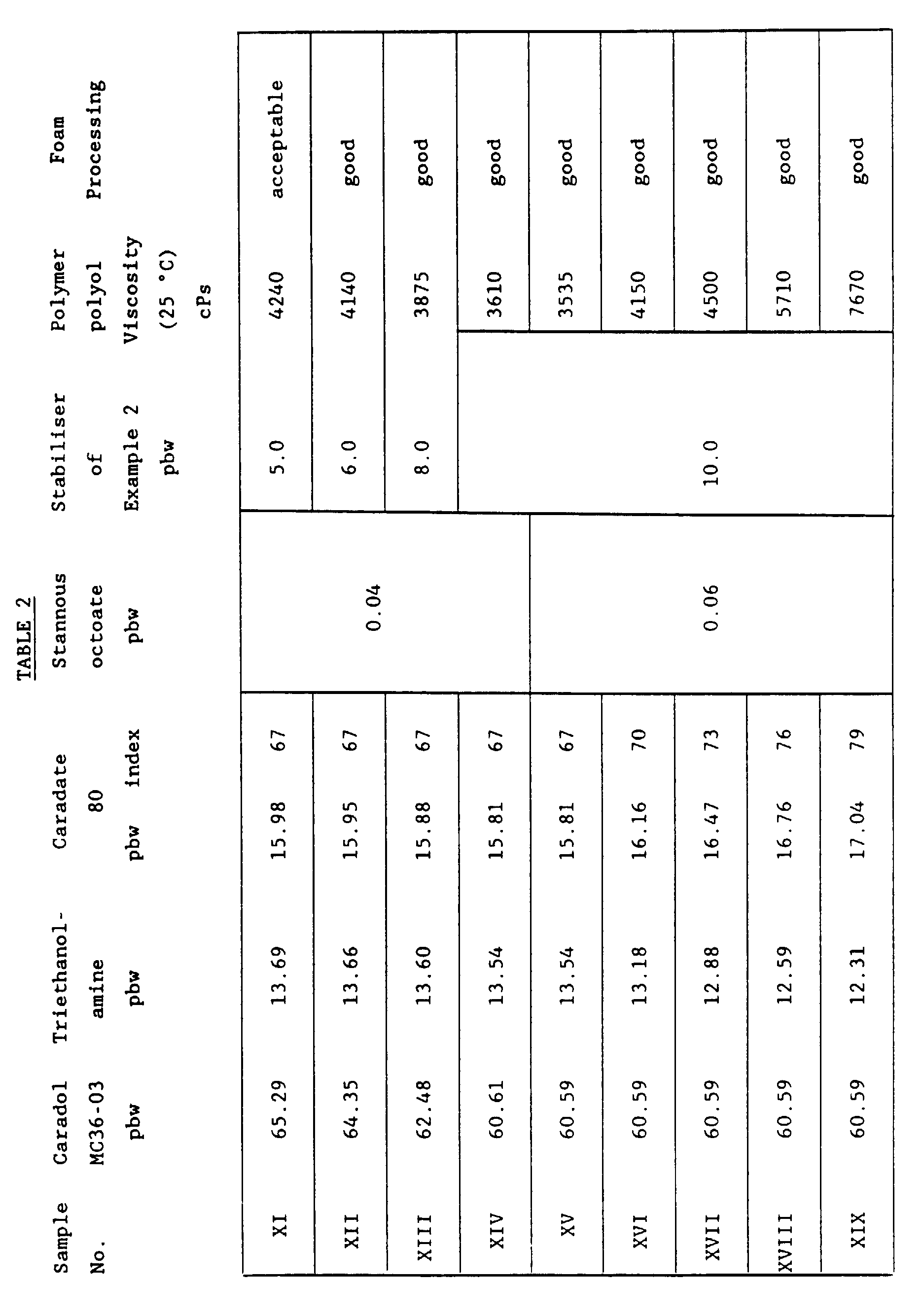

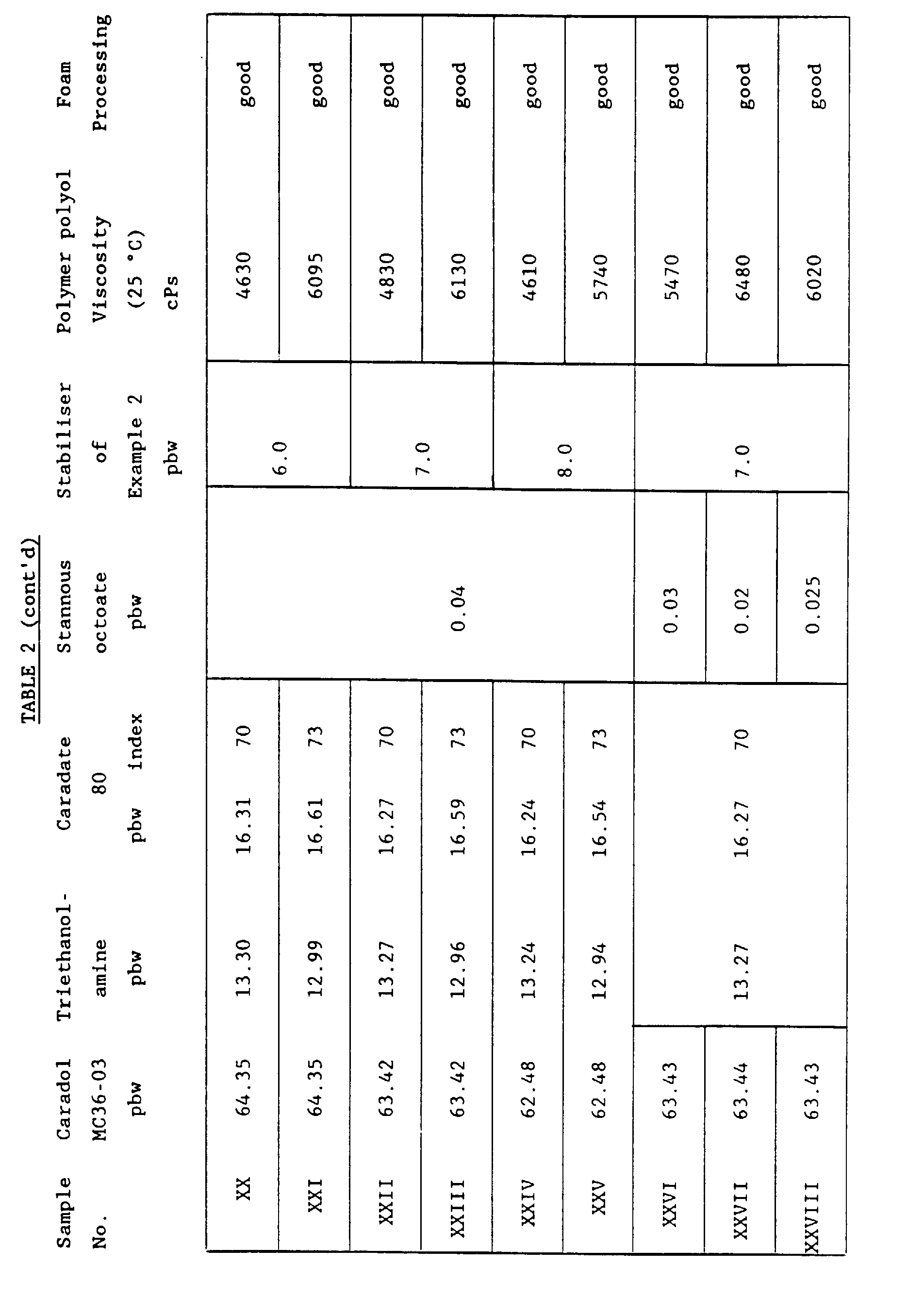

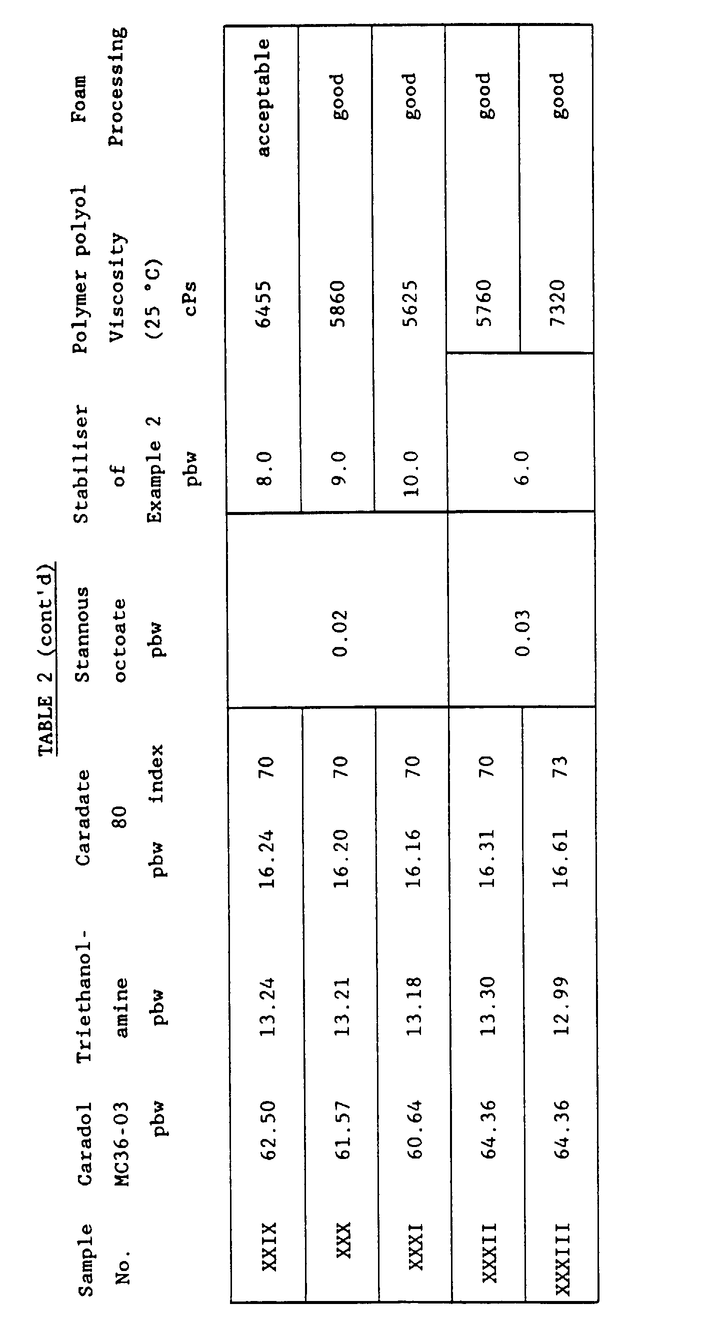

### EXAMPLE 5

The preparation of the polymer polyol of sample XXXI of Example 4 was repeated on a larger, 4kg, scale. Then portions of the 30wt% solids polymer polyol were diluted with polyol CARADOL MC36-03 to obtain polymer polyols of lower solids content. The viscosities of the undiluted and diluted polymer polyols were measured; the results are given below:

| Solids content of polymer polyol wt% | Dilution ratio of sample: polyol (by weight) | Viscostiy (25°C) cPs |
|---|---|---|
| 30 | - | 5353 |
| 20 | 2:1 | 2505 |
| 15 | 1:1 | 1820 |
| 10 | 1:2 | 1338 |

### EXAMPLE 6

In this Example high solids content polymer polyols were prepared by the process described in British Patent Specification No. 2,072,204A, using dibutyltin dilaurate as catalyst.

The reactant amounts and viscosity properties are given below:

| Sample | A | B |
|---|---|---|
| CARADOL SA36-01 | 79.81pbw | 69.97pbw |
| Triethanolamine | 9.38pbw | 13.84pbw |
| CARADATE-80* | 10.78pbw | 16.16pbw |
| Dibutyltin dilaurate | 0.03pbw | 0.03pbw |
| Solids content | 20wt% | 30wt% |
| Viscosity (25°C) | 7600cPs | not measurable |
| | | |
| Viscosity (25°C) when diluted to 10wt% solids content | 1855cPs | 'paste' |

| | | |
|---|---|---|
| (* index 66°) | | |

### EXAMPLE 7

Here the preparation of a 20wt% polymer polyol was attempted according to the process of GB-A-2,072,204 but using stannous octoate as catalyst.

| | |
|---|---|
| CARADOL SA36-01 | 79.79pbw |
| Triethanolamine | 9.38pbw |
| CARADATE-80* | 10.78pbw |
| Stannous octoate | 0.05pbw |
| Solids content | 20wt% |
| Viscosity (25°C) | not measurable |

| | |
|---|---|
| (* index 66°) | |

The precipitated solids no longer had the form of very small particles but were present as large agglomerates that separated from the polyol on standing.

In Example 6 a 20wt% polymer polyol was preparable by the prior art method using the preferred catalyst of GB-A-2,072,204, but not a 30wt% polymer polyol. In substituting a tin catalyst, stannous octoate, not even a useful 20wt% polymer polyol was preparable by the method of GB-A-2,072,204, as shown in Example 7.

## Claims

1. A process for preparing a polymer-modified polyol, which process comprises polymerising an olamine with a polyisocyanate in the presence of a polyol and of an added stabiliser which is itself an olamine polymer-modified polyol.

2. A process as claimed in claim 1, wherein the olamine is triethanolamine.

3. A process as claimed in claim 1 or in claim 2, wherein the stabiliser has been prepared using an ethylene oxide tipped polyoxypropylene polyether polyol having an ethylene oxide content of in the range of from 10 to 20wt%.

4. A process as claimed in any one of claims 1 to 3, wherein the polyol is an ethylene oxide tipped polyoxypropylene polyether polyol having an ethylene oxide content of in the range of from 10 to 20 wt%.

5. A process as claimed in claim 4, wherein the polyol is an ethylene oxide tipped polyoxypropylene polyether polyol having an ethylene oxide content of less than 15wt%.

6. A process as claimed in anyone of claims 1 to 5, wherein dibutyltin dilaurate has been utilised as catalyst in the preparation of the stabiliser.

7. A process as claimed in any one of claims 1 to 6, wherein stannous octoate is utilised as catalyst in the preparation of the polymer-modified polyol.

8. A process as claimed in anyone of claims 1 to 7, wherein in the range of from 4 to 10 parts by weight of stabiliser is used based on the total weight of the reaction components.

9. A process as claimed in anyone of claims 1 to 8, wherein the polymer-modified polyol is blended with additional polyol subsequent to preparation.

10. The use of an olamine polymer-modified polyol, prepared by polymerising an olamine with a polyisocyanate in the presence of a polyol, as a stabliser in the preparation of a polymer-modified polyol.

## Patentansprüche

1. Verfahren zur Herstellung eines Polymer-modifizierten Polyols, welches Verfahren ein Polymerisieren eines Olamins mit einem Polyisocyanat in Anwesenheit eines Polyols und eines zugesetzten Stabilisators umfaßt, der selbst ein Olaminpolymer-modifiziertes Polyol ist.

2. Verfahren nach Anspruch 1, worin das Olamin Triethanolamin ist.

3. Verfahren nach Anspruch 1 oder 2, worin der Stabilisator unter Verwendung eines Polyoxypropylenpolyetherpolyols mit endständigen Ethylenoxidgruppen mit einem Ethylenoxidgehalt im Bereich von 10 bis 20 Gew.-% bereitet worden ist.

4. Verfahren nach einem der Ansprüche 1 bis 3, worin das Polyol ein Polyoxypropylenpolyetherpolyol mit endständigen Ethylenoxidgruppen mit einem Ethylenoxidgehalt im Bereich von 10 bis 20 Gew.-% ist.

5. Verfahren nach Anspruch 4, worin das Polyol ein Polyoxypropylenpolyetherpolyol mit endständigen Ethylenoxidgruppen mit einem Ethylenoxidgehalt von weniger als 15 Gew.-% ist.

6. Verfahren nach einem der Ansprüche 1 bis 5, worin Dibutylzinndilaurat als Katalysator in der Herstellung des Stabilisators verwendet worden ist.

7. Verfahren nach einem der Ansprüche 1 bis 6, worin Zinn(II)octoat als Katalysator in der Herstellung des Polymer-modifizierten Polyols verwendet worden ist.

8. Verfahren nach einem der Ansprüche 1 bis 7, worin 4 bis 10 Gew.-Teile Stabilisator, bezogen auf das Gesamtgewicht der Reaktionskomponenten, verwendet werden.

9. Verfahren nach einem der Ansprüche 1 bis 8, worin das Polymer-modifizierte Polyol nach der Herstellung mit weiterem Polyol vermischt wird.

10. Verwendung eines Olaminpolymer-modifizierten Polyols, hergestellt durch Polymerisieren eines Olamins mit einem Polyisocyanat in Anwesenheit eines Polyols, als Stabilisator in der Herstellung eines Polymer-modifizierten Polyols.

## Revendications

1. Procédé de préparation d'un polyol modifié par un polymère, lequel procédé comprend la polymérisation d'un olamine avec un polyisocyanate, en présence d'un polyol et d'un stabilisateur ajouté qui est lui-même un polyol modifié par un polymère à olamine.

2. Procédé suivant la revendication 1, caractérisé en ce que l'olamine est la triéthanolamine.

3. Procédé suivant la revendication 1 ou la revendication 2, caractérisé en ce que le stabilisateur a été préparé en utilisant un polyoxypropylènepolyétherpolyol coiffé d'oxyde d'éthylène, possédant une teneur en oxyde d'éthylène qui varie de 10 à 20% en poids.

4. Procédé suivant l'une quelconque des revendications 1 à 3, caractérisé en ce que le polyol est un polyoxypropylènepolyétherpolyol coiffé d'oxyde d'éthylène, possédant une teneur en oxyde d'éthylène qui varie de 10 à 20% en poids.

5. Procédé suivant la revendication 4, caractérisé en ce que le polyol est un polyoxypropylènepolyétherpolyol coiffé d'oxyde d'éthylène, possédant une teneur en oxyde d'éthylène inférieure à 15% en poids.

6. Procédé suivant l'une quelconque des revendications 1 à 5, caractérisé en ce que l'on a utilisé du dilaurate de dibutylétain à titre de catalyseur, pour la préparation du stabilisateur.

7. Procédé suivant l'une quelconque des revendications 1 à 6, caractérisé en ce que l'on utilise l'octoate stanneux à titre de catalyseur, pour la préparation du polyol modifié par un polymère.

8. Procédé suivant l'une quelconque des revendications 1 à 7, caractérisé en ce que l'on utilise de 4 à 10 parties en poids de stabilisateur, sur base du poids total des composants réactionnels.

9. Procédé suivant l'une quelconque des revendications 1 à 8, caractérisé en ce que l'on mélange le polyol modifié par un polymère à du polyol supplémentaire après la préparation.

10. Utilisation du polyol modifié par un polymère à olamine, préparé par la polymérisation d'une olamine avec un polyisocyanate, en présence d'un polyol, à titre de stabilisateur pour la préparation d'un polyol modifié par un polymère.
